# EUROPEAN PATENT APPLICATION

(11) **EP 4 799 479 A1**
(43) Date of publication of application: **02.09.2026**
(21) Application number: 25161109.1
(22) Date of filing: 28.02.2025
(51) Int. Cl.: A01M 21/04, F16P 1/02

(54) **A DEVICE AND METHOD FOR REDUCING THE EMISSION OF LASER RADIATION**

(71) Applicant: Caterra AG, 8152 Glattpark (Opfikon) (CH)
(72) Inventor: NEUMANN, Florian, 78464 Konstanz (DE); BREITENHUBER, Margarete, 8038 Zürich (CH); HILFIKER, Lukas, 8049 Zürich (CH); BARTON, Patrick, 8008 Zürich (CH); NEFF, Aurel, 8152 Glattpark (Opfikon) (CH); STRAHM, Manuel, 8046 Zürich (CH)
(74) Representative: Troesch Scheidegger Werner AG

(57) **Abstract**

A covering device (1), a protection arrangement (9) for shielding a laser radiation, a method (100) for reducing and/or eliminating the amount of laser radiation emission and a corresponding use. The protection arrangement (9) according to the invention comprises a sensor (11), a case (3) and a form flexible curtain (5) configured to tightly abut a surface positioned below the arrangement, wherein both the case (3) and the flexible curtain (5) are non-transmissive to laser radiation. The current invention further pertains to a laser weeding robot comprising the inventive protection arrangement (9) as well as its use for increasing the safety standards while operating the robot.

## Description

### TECHNICAL FIELD OF THE INVENTION

The current invention relates to the technical field of radiation protection technology, in particular laser radiation protection. The current invention is preferably directed to a radiation protection device and/or method in the context of laser devices such as for example a laser weeding robot, a laser welding robot, a laser scanning robot, or a laser sorting robot.

### DESCRIPTION OF THE RELATED ART

Despite the undeniable benefits of laser radiation, it comes with numerous risks for humans and animals. Direct irradiation can cause damage to retina, cornea and lens of the eye, leading to permanent vision loss. Additionally, a direct exposure to strong laser radiation can cause serious skin damage, including skin cancer. The hazards may derive both from reflected or scattered laser beams and from direct laser beams having a wavelength from 400 nm to 1400 nm. A possible measure taken to protect the eyes is the use of specialized safety glasses that meet the requirements of national standards. Herein, different kinds of eye protection are required when working with dangerous light sources, such as safety goggles or laser glasses.

Laser technology, known for its high precision and efficiency, has become a cornerstone in various industries. As laser technology and devices continuously evolve, their role expands beyond industrial production, showcasing immense potential across diverse sectors. Hence, also the demand for alternative or improved laser protection is increasing.

A recent development in the field of laser application technology are laser weeding devices, also called laser weeding robots. Known laser weeding robots comprise a mobile vehicle, a laser, a first and a second vision system and a control system. The first vision system is configured to detect forward information and to guide the mobile vehicle to move forward along the row direction of plants such as crops and the second vision system is configured to identify a weed plant and to determine its position. After having identified a weed plant and having determined its position, the laser weeding robot points a laser beam on the weed plant to damage or destroy it, for example by cutting or burning it. Mostly, the weeds are internally heated to temperatures at which single cells or whole tissues are seriously damaged, leading to the weed's death.

As much as laser radiation is harmful to the weeds, it can also be very harmful to humans. Hence, the personnel operating or supervising a working laser weeding robot should be aware of this danger and take appropriate protective measures.

In the state of the art, such measures are limited to the use of safety goggles or face protectors, which, however, are not particularly comfortable when working in the field, dust and heat. Moreover, these measures are also limited to the wearer - the immediate surroundings, such as passing personnel, etc., are not protected. In the case of weeding laser robot used in an open field, accidentally passing pedestrians, including children, animals, for example, are not protected from the laser radiation emitted by the robot.

Although only the example of a laser weeding robot has been discussed above in detail, it goes without saying that the skilled practitioner will be faced with the same or similar safety problems, regardless of which laser device he or she will be using.

### SUMMARY OF THE INVENTION

It is a task of current invention to provide a device and/or a method which overcome the disadvantages of known laser protection. In particular, it is a task to provide a device and/or a method which offer greater comfort for the user and/or offer the user a sufficient protection from the hazards deriving from laser radiation. Further in particular, it is a task to provide a convenient laser protection device and/or method for use in public spaces, such as a public park or an agronomic environment, for example when operating a laser weeding device in a field. For example, it is a task of the present invention, to provide protection from laser radiation in a situation when other people than those trained for usage of the laser device can approach the laser.

This task is solved by a covering device with the features of claim 1, a method with the features of claim 10, a laser weeding device with the features of claim 14 and a use of the covering device or the method with the features of claim 15. Further embodiments of the device, method and use are defined by the features of the dependent claims.

### DETAILED DESCRIPTION OF THE INVENTION

In a first aspect, the invention is directed to a covering device. The covering device comprises an inner space filling an inside of the covering device, the device being suitable for shielding an outside region of the covering device from a laser radiation inside the inner space, the inner space having a top side and a bottom side being offset in direction of gravity with respect to the top, the covering device comprising a case comprising a case top positioned essentially at the top of the inner space and a form flexible curtain, optionally extending from the case or the case top, circumferentially bordering the inner space and extending down to an imaginary bottom of the inner space, the flexible curtain being adapted to abut a surface arranged below the imaginary bottom, wherein the imaginary bottom of the inner space is open to the outside region and wherein the covering device is configured such that no laser radiation can exit from the inner space except through the imaginary bottom of the inner space, in particular wherein both the case and the flexible curtain are not transmissive to laser radiation.

The covering device comprises an inner space which fills the inside of the covering device. The inside is herein defined as an inner volume, meaning that the inside can be fully closed off from the outside region or it can be in fluid contact with the outside region, for example via an opening of the covering device positioned in the imaginary bottom of the inner space. The covering device is suitable for shielding the outside region from a laser radiation provided inside the inner space. Herein, the laser radiation may be provided for example by a laser positioned inside the inner space, or by a laser positioned outside the inner space. In the embodiment with the laser being positioned in the outside region, the laser radiation may be coupled to the inside of the covering device, for example by the means of a tube not transparent to laser radiation.

The inner space of the covering device is divided into a top region with a top side and a bottom region with a bottom side. The top and the bottom side are not one and the same side - the bottom side is offset in direction of gravity with respect to the top side.

The covering device comprises a case having a case top, the case top being positioned essentially at the top of the inner space. In an embodiment, the case is a form flexible case, optionally wherein the case and the curtain are a one-piece design, for example by being made of the same material piece, or by being made of the same or different material and connected to each other, for example by gluing or sewing. In some embodiments, the form flexible case may be transparent to laser radiation allowing for coupling the radiation of a laser outside the inner space into the inside of the inner space, or it is not transparent to any laser radiation.

In a further embodiment, the case is a form stable case. With "form stable" we mean that the case does not easily change its form, in particular under the standard conditions for operating a laser device, for example a laser weeding robot. Hence, the form stable case does not easily bend or warp without the case being destroyed. In some embodiments, the form stable case may be transparent to laser radiation allowing for coupling the radiation of a laser outside the inner space into the inside of the inner space, or it is not transparent to any laser radiation.

With the case top being transparent or having a hole to couple the laser radiation, additional covering elements should be provided in order to shield the incoming laser beam. Such additional covering elements may be arranged inside and/or outside the inner space of the covering device. The case top of the inventive covering device is positioned essentially at the top of the inner space, preferably exactly at the top and/or, in particular, the form flexible or form stable case forms a border between the inner space and the outside region of the covering device. A skilled practitioner may choose a geometric form of a form stable case according to his or her needs. In an embodiment, the case has a cuboid, rectangular, pyramidal, half-spherical, rounded, regular or irregular form.

The covering device further comprises the form flexible curtain which optionally extends from any point of the case and circumferentially borders the inner space while extending down to an imaginary bottom of the inner space.

Unlike a form stable case top, the form flexible curtain can easily change and adapt its form to other forms contacting it. In an embodiment, the inner space is entirely circumferentially bordered by the curtain. However, also embodiments in which the inner space is only partially circumferentially bordered by the curtain are equivalent and should fall within the scope of protection. For example, when the curtain does not entirely circumferentially border the inner space, a laser-non-transparent plate may be used to border the remaining circumference.

The curtain extends down in direction of gravity to an imaginary bottom of the inner space. As the name says, the imaginary bottom is meant to be only an imaginative construct and not a physical bottom entirely made of a material. Hence, the imaginary bottom is entirely or at least in parts fluidly open to the outside region. As the curtain extends down to the imaginary bottom in direction of gravity, in a cross-sectional view perpendicular to said direction, the bottom edge of the curtain (i.e. the edge which is not on the side of the case top) borders the imaginary bottom.

Due to its flexibility, the curtain is adapted to abut a surface arranged below the imaginary bottom or essentially in the plane of the imaginary bottom by adapting its form to the form of said surface, the surface being in particular arranged in the outside region of the covering device. The covering device does not allow the laser radiation to exit the inner space and hence protects any person in the outside region from the laser hazards. In an embodiment, the only way, in which the laser radiation may exit the inner space is through the fluidly open imaginary bottom. Therefore, in an embodiment, the covering device is configured for not being used on a surface being a part of a human or animal body, in particular a human or animal tissue.

The laser specifications applying in the context of the present invention are for example: an optical laser, a laser having a wavelength of 200 nm to 20000 nm, in particular 200 nm to 12000 nm, 10000 nm to 12000 nm, or 200 nm to 5000 nm, further in particular 600 nm to 20000 nm, or 600 nm to 10000 nm. In an embodiment, the laser source has a power in the range of 1 W to 2 kW, in particular 1 W to 1 kW or 1kW to 2 kW, and/or is a nitrogen laser, a carbon dioxide laser, a carbon monoxide laser, an excimer laser, a ruby laser, a Nd:glass laser, any YAG laser, for example a Nd:YAG laser, Er:YAG laser, or an Yb:YAG laser.

In a preferred embodiment, both the case and the form flexible curtain are not transparent to any laser radiation. However, there are also embodiments in which, the curtain and/or the case are not transparent to a specific laser wavelength and/or power. The person skilled in the art will understand which case and/or curtain materials are suitable for use with which laser specifications.

In a further embodiment, the covering device is part of a laser device, in particular of a laser weeding robot. Herein, the laser radiation inside the inner space of the covering device is the laser radiation provided by the laser device and optionally, no further lasers are positioned within the inner space.

In a further embodiment of the covering device, which may be combined with any of the preceding and/or the following embodiments or aspects, unless in contradiction, the form flexible or form stable case or the case top is bordered by the form flexible curtain along a case or a case top edge, in particular the form flexible curtain contacts the case or the case top edge along the entire length of the case or the case top edge.

For example, the curtain may be detachably arranged along the case or the case top edge or it may be fixed such that detaching it from the case would not be possible without damaging or destroying the covering device. Suitable means for fixing or attaching are for example glue, glue tape, a button, nail, clip, or thread.

In a preferred embodiment, the form flexible curtain contacts the case along its entire edge length such that no gaps are present. This is especially advantageous because as there are no gaps, no radiation can escape the covering device, regardless of whether it is moving or not.

In a further embodiment of the covering device, which may be combined with any of the preceding and/or the following embodiments or aspects, unless in contradiction, the flexible curtain comprises at least one, preferably 2, 3, 4, or more than 4 layers arranged essentially parallel to the direction of gravity and being made of a material resistant to a direct laser irradiation, in particular the material being selected from the group consisting of: a silica aluminium foil flame retardant fabric, a ceramic fabric, a soft aluminium fabric, a metal mesh, a sheet aluminium, a sheet metal different from aluminium, a laser safety material, a graphite-glass fiber material, a silicate fiber material, and a ceramic fiber material, or the flexible curtain is entirely made of a material resistant to a direct laser irradiation, in particular the material being selected from the group consisting of: a silica aluminium foil flame retardant fabric, a ceramic fabric, a soft aluminium fabric, a metal mesh, a sheet aluminium, a sheet metal different from aluminium, a laser safety material, a graphite-glass fiber material, a silicate fiber material, and a ceramic fiber material.

At least one of the laser-resistant and laser non-transparent curtain layers extend down to an imaginary bottom of the inner space. In embodiments comprising more than one of such layers, not all layers must extend down to the bottom - it is enough if only one layer, a first layer, does so. In this case, the other layers may offer some additional protection by extending only to 1/3, 1/2, or 2/3 of the length at which the first layer is extending down to the imaginary bottom.

The at least one layer is arranged essentially parallel to the direction of gravity, meaning that the arrangement does not have to be perfectly parallel. Also, embodiments wherein the at least one layer is arranged slightly deviating from the parallel arrangement, e.g. by 1° to 30°, in particular 1° to 20°, 1° to 10° or 1° to 5°, fall within the scope of invention.

In a further embodiment of the covering device, which may be combined with any of the preceding and/or the following embodiments or aspects, unless in contradiction, the single layers of the flexible curtain are arranged adjacent to each other or distanced from each other, in particular the layers of the flexible curtain all have the same length or they have different lengths, further in particular an outer layer which is at the shortest distance to the outside region is longer than an inner layer which is at the longest distance to the outside region.

In an embodiment of the covering device, the inner layer which is at the shortest distance to the inner space and at the longest distance to the outside region, in particularly contacting the inner space, is longer than the outer layer. An embodiment in which the layers have different lengths gives the curtain more flexibility in abutting especially uneven surfaces because the levelling of the curtain is already present and does not first have to be formed by bending the curtain.

In a further embodiment of the covering device, the bottom edge of the curtain, in particular of at least one single layer, comprises at least one, preferably more than one, cuts essentially perpendicular to the layer's bottom edge. Such cuts allow for an even easier adaptation of the curtain's bottom edge to an uneven surface hence improving its abutting ability.

In a second aspect, the invention is directed to a protection arrangement for shielding a laser radiation deriving from a laser of a laser weeding robot, the protection arrangement comprising a covering device according to any one of the preceding embodiments and having an inner space with an imaginary bottom, a source of laser radiation configured to emit laser radiation into said inner space, in particular a laser inside the inner space of the covering device and at least one sensor, the sensor being configured to determine a distance between a bottom part of the flexible curtain of the covering device and a surface arranged below or in the plane of the imaginary bottom of the inner space and/or to determine whether the flexible curtain of the covering device abuts the surface arranged below or in the plane of the imaginary bottom of the inner space, in particular whether the flexible curtain abuts the surface without any gaps, further in particular when the protection arrangement is positioned on the surface.

The source of laser radiation configured to emit laser radiation into the inner space of the covering device may for example be a laser arranged or mounted inside the inner space, or a laser arranged or mounted outside the inner space - in the outside region of the covering device - and emitting a laser radiation to be coupled inside the inner space - for example by one or more mirrors or scattering surfaces. In an embodiment of the arrangement, the source of laser radiation is a laser of a laser weeding robot.

The protection arrangement further comprises a sensor which is adapted to determine the distance between a bottom part of the flexible curtain, in particular its bottom edge, and a surface positioned below the imaginary bottom. As "bottom part" we understand a part of the curtain essentially in the region below the half of the curtains length as measured from the case top, or below 2/3, 4/5, 9/10, or 99/100. In an embodiment of the protection arrangement, at least two, for example 3**,** 4**,** 5, 6, 7, 8, 9**,** or 10 sensors are present.

In a further embodiment of the protection arrangement, which may be combined with any of the preceding and/or the following embodiments or aspects, unless in contradiction, the at least one sensor is selected from the group consisting of a mechanical tactile sensor, a photoelectric sensor, an ultrasonic distance sensor, an IR distance sensor, a laser distance sensor, a capacitive distance sensor, an inductive distance sensor, an optical distance sensor, optionally a camera sensor, in particular wherein the at least one sensor is fixed or detachably arranged at the covering device, or is not part of the covering device.

In an embodiment of the protection arrangement, the sensor may be any sensing device or system configured to determine a distance between a bottom part of the flexible curtain of the covering device and a surface arranged below or in the plane of the imaginary bottom of the inner space and/or to determine whether the flexible curtain of the covering device abuts the surface arranged below or in the plane of the imaginary bottom of the inner space. For example, the sensor may be a system comprising a light emitter arranged inside the covering device and a light sensing or measuring element arranged outside the covering device. Also, a reverse arrangement with the light emitter outside the covering device and a light sensing or measuring element arranged inside the cover device is possible. In this case, for example, the amount of light arriving from the light emitter to the light sensing or measuring element may be used as an indicative for whether the curtain abuts the surface.

In a further embodiment of the protection arrangement, which may be combined with any of the preceding and/or the following embodiments or aspects, unless in contradiction, the at least one sensor is arranged at the flexible curtain, in particular at the bottom part of the flexible curtain, or at the case, in particular case top, further in particular inside or outside the inner space.

In a further embodiment of the protection arrangement, which may be combined with any of the preceding and/or the following embodiments or aspects, unless in contradiction, the protection arrangement further comprises at least one means for defining a path of laser radiation and/or disabling the source of laser radiation, in particular the laser, and/or for moving the covering device, the means for defining the path and/or for disabling and/or for moving being in particular functionally connected to the at least one sensor and adapted to define the path of laser radiation, in particular the laser, and/or disabling the source of laser radiation and/or for moving the covering device depending on whether the flexible curtain of the covering device abuts the surface arranged below or in the plane of the imaginary bottom of the inner space.

The means for defining a path of laser radiation is for example selected from a group consisting of a mirror, a lens, a reflector, for example a metal surface such as Al metal, and a combination thereof. Herein, the purpose of the means for defining the path is to allow setting the radiation path in such a way that no laser radiation can exit the protection arrangement to the outside. In this sense, the "means for defining a path" is a device or an arrangement configured to change or to adapt the path of laser radiation in the inner space. As this means is operationally connected to the at least one sensor, in particular to a unit processing the measurement results of the sensor, such adaptation can be performed in real-time depending on whether the curtain abuts the surface below. For example, when the sensor detects that the curtain does not abut the surface and laser radiation could therefore possibly exit the covering device, the path of the laser radiation is adapted such that no laser beam can exit though the imaginary bottom.

In an embodiment, instead of or in combination with the means for defining the path of laser radiation, the protection arrangement further comprises a means for disabling the source of laser radiation. In particular, such means is a device, or an arrangement configured to disable the laser in providing a laser beam in and/or into the inner space of the covering device, for example by switching off the laser or the power source of the laser. Some examples are a relay, or a fuse or any other electrical installation element allowing for disrupting or lowering the electrical current to the source of laser radiation, or an object configured to absorb laser radiation when positioned in the laser beam, in particular directly in front of the laser.

In a further embodiment, instead of or in combination with the means for defining the path and/or disabling the source, the protection arrangement further comprises a means for moving the covering device. Herein, the purpose of the means for moving the covering device is to move the device vertically and/or horizontally in such a way that no laser radiation can exit the protection arrangement to the outside. Therefore, the "means for moving" is a device or an arrangement configured to change or to adapt the vertical and/or horizontal position, of the covering device, in particular the case and/or the curtain, with respect to the surface to be abut by the curtain. As this means is operationally connected to the at least one sensor, in particular to a unit processing the measurement results of the sensor, such adaptation can be performed in real-time depending on whether the curtain abuts the surface below. For example, when the sensor detects that the curtain does not abut the surface and laser radiation could therefore possibly exit the covering device, the height of the case and/or the curtain is adapted such that no laser beam can exit to the outside.

In a further embodiment of the protection arrangement, which may be combined with any of the preceding and/or the following embodiments or aspects, unless in contradiction, the at least one means for defining the path of laser radiation, in particular the laser and/or for disabling and/or for moving the covering device is selected from the group consisting of: a motor or a motor setup configured to move the laser radiation and/or the laser, a lever, a steerable motor, a galvano scanner configured to redirect a mirror, a motor or a motor setup configured to position an object in front of the laser.

In a third aspect, the invention is directed to a method for reducing and/or eliminating the amount of laser radiation emitted by a laser weeding device to its environment comprising the following steps, in particular in the given order:
a) providing a laser weeding device comprising a covering device according to any one of the preceding embodiments, or a protection arrangement according to any one of the preceding embodiments,
b) determining whether the flexible curtain of the covering device abuts a surface arranged below or in the plane of the imaginary bottom of the inner space, the surface arranged below or in the plane of the imaginary bottom of the inner space corresponding to the surface on which the weeding device is positioned, in particular on which plants to be treated are growing,
c) moving the covering device and/or the source of laser radiation to a position in which the flexible curtain of the covering device abuts the surface arranged below or in the plane of the imaginary bottom of the inner space if the curtain was determined to be not abutting, or not moving the covering device and/or the source of laser radiation if the curtain was determined to be abutting, and/or optionally
d) enabling the source of laser radiation to provide laser radiation if the curtain abuts the surface or disabling the source of laser radiation if the curtain does not abut the surface.

The method is in particular directed to reducing and/or eliminating the amount of scattered or direct laser radiation.

In an embodiment, the method consists of the named steps a), b), c) and d), in particular in the given order.

In step a), a laser weeding device comprising the inventive covering device or protection arrangement is provided. In an embodiment, the laser or source of laser radiation providing laser radiation in or into the inner space of the covering device is a laser of the weeding device. Step a) is preferably followed by step b), wherein the weeding device is positioned on a surface which may be essentially even or have a pronounced unevenness. In particular, the usual environment in which the laser weeding robot is used is very uneven, which is due to the rows of plants. In step b) it is determined whether the curtain abuts said surface. Suitable means for such determination are for example sensors or cameras, the measurement data of which are evaluated by a processing unit. In a preferred embodiment of the method, step b) is followed, in particular without any other steps in between, by step c). In step c) the covering device and/or the source of laser radiation are moved to a position, in which the curtain abuts said surface if the curtain was determined to be abutting. Such movement may be for example vertical, horizontal or a combination thereof. In an embodiment, the source of laser radiation is a laser, which is moved by a motorized arm. In a further embodiment, moving the source of laser radiation is realized not by physically moving the laser itself, but by moving the laser beam arriving from the source of laser radiation. Herein, the laser beam may for example be reflected at a reflective surface, e.g. a mirror or a reflective metallic or non-metallic surface, arranged inside or outside the covering device.

Step d) is either not performed, or it is performed in combination with step c) or before or after step c), or it is performed instead of step c). In step d) the source of laser radiation is enabled to provide laser radiation, or, kept on providing the laser radiation if it was not before disabled, if in step b) the curtain was determined to abut the surface. If in step b) the curtain was determined to not be abutting the surface, the source of laser radiation, in particular the laser, is disabled. Such disabling may for example be realized by switching off the source of the laser radiation itself, by switching off the power source of the laser radiation, or in any other way such that no laser radiation is provided in or into the inner space of the covering device. Alternatively, a laser radiation absorbing block may be positioned in front of the laser such that the laser beam is interrupted and absorbed. Suitable examples for an absorbing block are an absorbing material comprising or consisting of iron, nickel or copper. In an embodiment, the absorbing block is a cooled absorbing block. In a further embodiment, the absorbing block is an electronic beam block and/or trap, for example a visible-NIR beam block, an IR beam block, or a beam trap configured to scatter and absorb laser beam energy. Exemplary devices suitable for use as a beam block and trap are the LB2L, LB1, LB2, BT600, BT610, BT620, or BTC30 produced by "THORLABS".

In a further embodiment of the method, which may be combined with any of the preceding and/or the following embodiments or aspects, unless in contradiction, an additional step b) is performed after step c), in particular wherein determining whether the flexible curtain of the covering device abuts the surface arranged below or in the plane of the imaginary bottom of the inner space in any of steps b) is performed by at least one sensor, further in particular by the at least one sensor of the protection arrangement.

In a further embodiment of the method, which may be combined with any of the preceding and/or the following embodiments or aspects, unless in contradiction, moving the covering device and/or the source of laser radiation in step c) is performed by the at least one means for defining a path of laser radiation, in particular the laser, and/or for moving the covering device, or manually.

In a further embodiment of the method, which may be combined with any of the preceding and/or the following embodiments or aspects, unless in contradiction, the laser weeding device moves in a direction of working during the performance of steps b), c) and/or d), or wherein the device moves only during the performance of steps b) and c), b) and d) or c) and d), or the device moves only during the performance of step b), c), or d), in particular the device moves before step b) and after step d) are performed, or only before step b) and after step d) are performed.

Moving in the direction of working while performing one or some of the method steps is advantageous for speeding up the processing. With the direction of processing, we mean the work direction of the laser device. For example, in the context of a laser weeding, the direction of working corresponds to the direction of movement along plant rows.

In a fourth aspect, the invention is directed to a laser weeding device comprising a covering device according to any one of the preceding embodiments, or a protection arrangement according to any one of the preceding embodiments, in particular configured to perform the method according to any one of the preceding embodiments.

In a fifth aspect, the invention is directed to a use of a covering device according to any one of the preceding embodiments, or a protection arrangement according to any one of the preceding embodiments, or a method according to any one of the preceding embodiments for reducing or eliminating the amount of laser radiation emitted by a laser weeding device to its environment.

In an embodiment, the covering device, protection arrangement, or method are used for increasing safety while operating or maintaining the laser device. In the context of laser weeding, the inventive devices and methods can moreover be used for reducing the health risk for animals and insects living in the laser treated fields with the laser action being limited to a better-defined area - as there is no laser scattering to the outside. In particular, the insects passing next to a lasering weeding device according to the invention benefit from a reduced laser emission. The use may also be directed to reducing any negative impacts on plants growing on fields neighboring to the laser treated ones.

### BRIEF DESCRIPTION OF THE DRAWINGS

Embodiments of the current invention are described in more detail in the following with reference to the figures. These are for illustrative purposes only and are not to be construed as limiting. It shows
Fig. 1 a schematic and simplified depiction of six different embodiments of the covering device (1);
Fig. 2 a schematic and simplified depiction of a cross section through an embodiment of a flexible curtain (5) comprising more than one layer;
Fig. 3 a schematic and simplified depiction of four different embodiments of the protection arrangement (9);
Fig. 4 a schematic and simplified depiction of an embodiment of the protection arrangement (9) and its relation to a surface arranged below or in the plane of the imaginary bottom (6);
Fig. 5 a photo of a laser weeding robot comprising a covering device (1) or a protection arrangement (9) according to the invention;
Fig. 6 a simplified flow chart showing three different embodiments of the method (100).

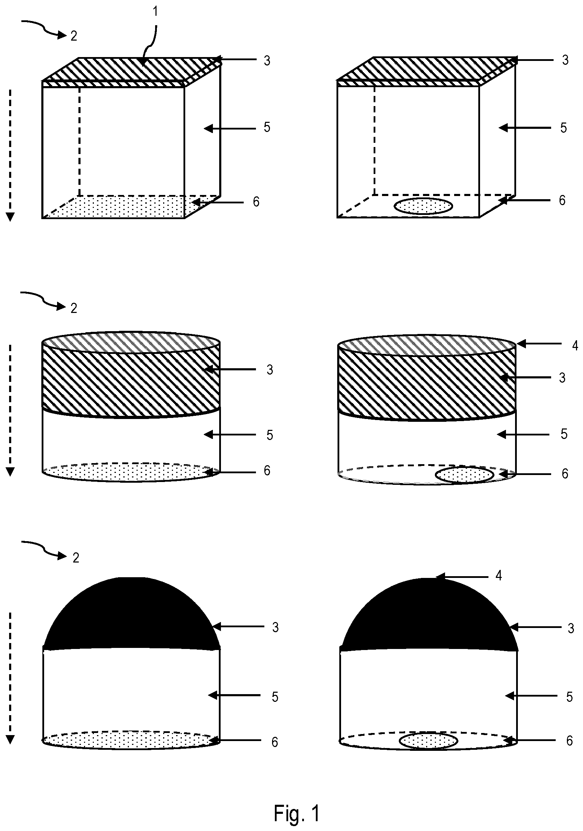

**Fig. 1** shows six different embodiments of the covering device 1 and, marked by a dashed arrow, the direction of gravity. In all depicted embodiments, the length of the form flexible case 3 along the direction of gravity is smaller or equal to the length of the form flexible curtain 5. However, also embodiments in which the length of the form flexible case 3 along the direction of gravity is bigger than the length of the curtain 5 fall within the scope of the present invention and can be combined with any embodiment and aspect already mentioned or to be mentioned, unless contradictory.

Depicted in the first row are two embodiments having a box-shaped or cuboid form flexible case 3 with a planar case top. The form flexible curtain 5 extends down from the case top to the imaginary bottom 6. In the embodiments shown on the left, the imaginary bottom 6 is entirely fluidly open to the outside region 2, as marked by the dotted area. In the embodiments shown on the right, the imaginary bottom 6 is only partially fluidly open to the outside region 2. The opening of the imaginary bottom 6 is arranged essentially in the middle, however also embodiments with a sidewise arrangement of the opening are possible.

Depicted in the second row are two embodiments having a cylindrical form flexible case 3 with a planar case top 4. The structure of these two embodiments essentially corresponds to the two embodiments above with the difference that in the right embodiment, the opening of the imaginary bottom 6 is arranged sidewise and not in the middle of the imaginary bottom 6.

Depicted in the third row are two embodiments having a hemispherical form flexible case 3 with a non-planar case top 4. Embodiments having a non-planar case top are particularly advantageous for use under rain conditions, as any water can easily flow down and does not collect on top of the device 1.

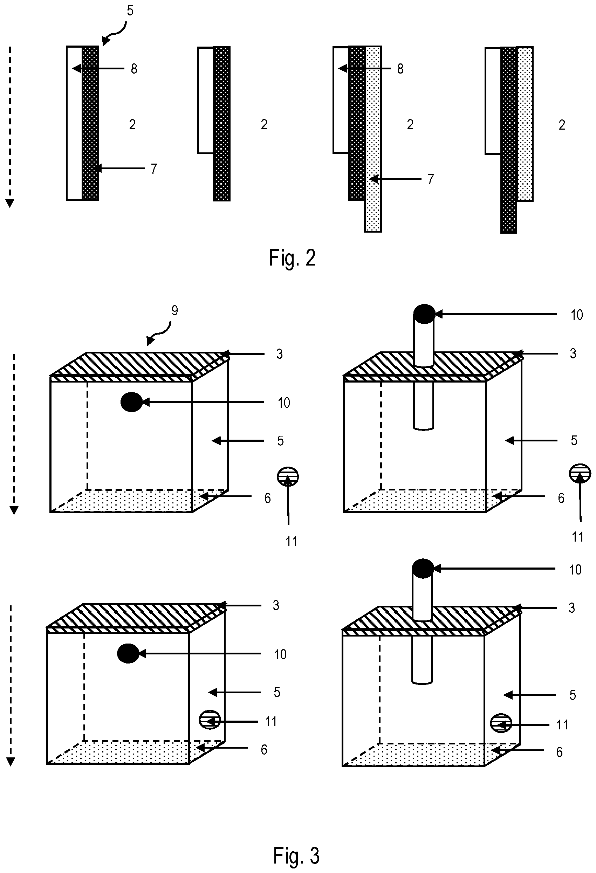

**Fig. 2** shows a schematic and simplified depiction of a cross section through four different embodiments of the flexible curtain 5. The dashed arrow on the left symbolizes the direction of gravity and the side of the curtain 5 symbolized by nr. 2 is the side which is in contact with the outside region 2. In all depicted embodiments of Fig. 2, the layers are adjacent to each other along their full length. However, also curtains 5 having layers which contact each other only along a certain length and not along the full length of the curtain 5, or layers not contacting each other at all, also fall within the scope of the present invention.

**Fig. 3** shows a schematic and simplified depiction of four different embodiments of the protection arrangement 9 comprising a covering device shown in the first row of Fig. 1 and, marked by a dashed arrow, the direction of gravity. However, any other embodiment of the covering device, in particular any covering device shown in Fig. 1, may be combined with the depicted features of 9. For the sake of clarity, only one sensor 11 and only one source 10 are depicted in the drawings. In further, not depicted embodiments, more than one sensors and/or more than one sources 10 are implemented.

In the first row, a different arrangement of the source of laser radiation 10 is shown. In the left embodiment, the source 10 is arranged inside the covering device, in particular below the case 3. In the right embodiment, the source 10 is arranged outside the covering device, i.e. in the outside region, and configured to provide laser radiation inside the covering device. In the depiction, this is realized by an optical feedthrough, however, also other suitable means are possible. In both the left and the right embodiment of the first row, the sensor 11 is arranged outside and not in contact with the covering device. Arranging the sensor outside and in physical contact with the covering device can also be realized in further embodiments.

The embodiments depicted in the second row are different from the above ones by the arrangement of the sensor 11. Both in the left and in the right embodiment, the sensor 11 is arranged in the bottom region of the curtain 5. The sensor 11 may be positioned inside or outside the covering device.

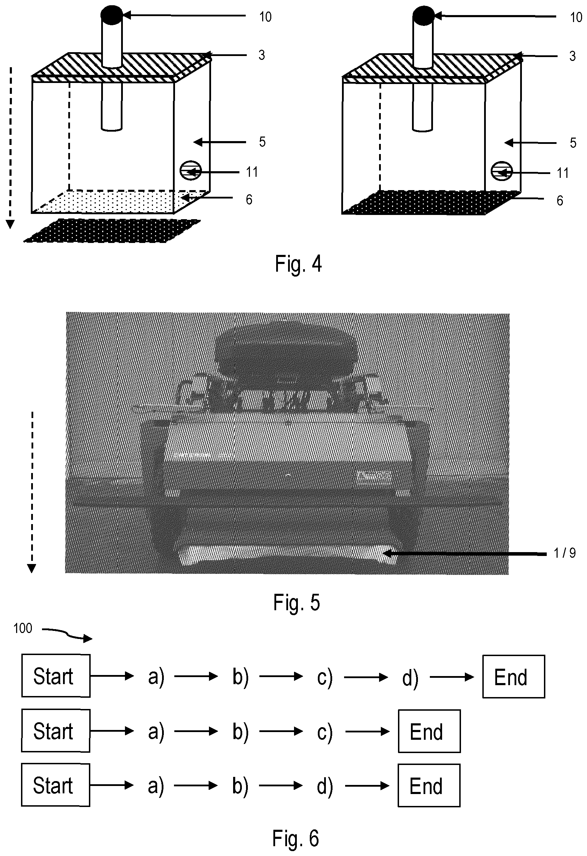

**Fig. 4** shows a schematic and simplified depiction of an embodiment of the protection arrangement and its relation to a surface arranged below or in the plane of the imaginary bottom 6 and, marked by a dashed arrow, the direction of gravity. Please be however advised that the surface is not part of the inventive arrangement 9 or covering device 1. In the left depiction, the surface is arranged below the imaginary bottom 6 and in the right depiction in the plane of the imaginary bottom 6, i.e. it is congruent with 6.

**Fig. 5** shows a photo of a laser weeding device / robot comprising a covering device 1 or a protection arrangement 9 according to the invention and, marked by a dashed arrow, the direction of gravity. In the depiction, the robot is positioned on a surface being a straight concrete surface. However, the robot is of course also configured to be positioned and operated on an uneven soil.

**Fig. 6** shows a simplified flow chart with three different embodiments of the method 100. In the depicted embodiments, the method finishes after or with the performance of step c) or step d) and it starts before or with the performance of step a). In some embodiments of the method 100, additional steps are performed between the steps a), b), c) and/or d), or no additional steps are performed between the depicted step sequences.

**REFERENCE SIGNS LIST**

| | | | |
|---|---|---|---|
| 1 | covering device | 11 | sensor |
| 2 | outside region of the covering device | 12 | means (12) for defining a path of laser radiation and/or disabling the source of laser radiation and/or for moving the covering device |
| 3 | case | | |
| 4 | case top | | |
| 5 | form flexible curtain | | |
| 6 | imaginary bottom | | |
| 7 | outer layer | | |
| 8 | inner layer | 100 | method for reducing and/or eliminating the amount of laser radiation |
| 9 | protection arrangement | | |
| 10 | source of laser radiation | | |

## Claims

1. A covering device (1) having an inner space filling the inside of the covering device (1), the device being suitable for shielding an outside region (2) of the covering device (1) from a laser radiation inside the inner space, the inner space having a top side and a bottom side being offset in direction of gravity with respect to the top, the covering device (1) comprising a case (3), in particular a form stable case, comprising a case top (4) positioned essentially at the top of the inner space and a form flexible curtain (5), optionally extending from the case (3) or the case top (4), circumferentially bordering the inner space and extending down to an imaginary bottom (6) of the inner space, the flexible curtain (5) being adapted to abut a surface arranged below the imaginary bottom (6), wherein the imaginary bottom (6) of the inner space is open to the outside region (2) and wherein the covering device (1) is configured such that no laser radiation can exit from the inner space except through the imaginary bottom (6) of the inner space, in particular wherein both the case (3) and the flexible curtain (5) are not transmissive to laser radiation.

2. The covering device (1) according to claim 1, wherein the case (3) or the case top (4) is bordered by the form flexible curtain (5) along a case or a case top edge, in particular wherein the form flexible curtain (5) contacts the case or the case top edge along the entire length of the case or the case top edge.

3. The covering device (1) according to claim 1 or 2, wherein the flexible curtain (5) comprises at least one, preferably 2, 3, 4, or more than 4 layers arranged essentially parallel to the direction of gravity and being made of a material resistant to a direct laser irradiation, in particular the material being selected from the group consisting of: a silica aluminium foil flame retardant fabric, a ceramic fabric, a soft aluminium fabric, a metal mesh, a sheet aluminium, a sheet metal different from aluminium, a laser safety material, a graphite-glass fiber material, a silicate fiber material, and a ceramic fiber material, or wherein the flexible curtain (5) is entirely made of a material resistant to a direct laser irradiation, in particular the material being selected from the group consisting of: a silica aluminium foil flame retardant fabric, a ceramic fabric, a soft aluminium fabric, a metal mesh, a sheet aluminium, a sheet metal different from aluminium, a laser safety material, a graphite-glass fiber material, a silicate fiber material, and a ceramic fiber material.

4. The covering device (1) according to claim 3, wherein the single layers of the flexible curtain (5) are arranged adjacent to each other or distanced from each other, in particular wherein the layers of the flexible curtain (5) all have the same length or they have different lengths, further in particular wherein an outer layer (7) which is at the shortest distance to the outside region (2) is longer than an inner layer (8) which is at the longest distance to the outside region (2).

5. A protection arrangement (9) for shielding a laser radiation deriving from a laser of a laser weeding robot, the protection arrangement (9) comprising a covering device (1) according to any one of claims 1 to 3 and having an inner space with an imaginary bottom (6), a source of laser radiation (10) configured to emit laser radiation into said inner space, in particular a laser inside the inner space of the covering device (1) and at least one sensor (11), the sensor (11) being configured to determine a distance between a bottom part of the flexible curtain (5) of the covering device (1) and a surface arranged below or in the plane of the imaginary bottom (6) of the inner space and/or to determine whether the flexible curtain (5) of the covering device (1) abuts the surface arranged below or in the plane of the imaginary bottom (6) of the inner space, in particular whether the flexible curtain (5) abuts the surface without any gaps, further in particular when the protection arrangement (9) is positioned on the surface.

6. The protection arrangement (9) according to claim 5, wherein the at least one sensor (11) is selected from the group consisting of a mechanical tactile sensor, a photoelectric sensor, an ultrasonic distance sensor, an IR distance sensor, a laser distance sensor, a capacitive distance sensor, an inductive distance sensor, an optical distance sensor, optionally a camera sensor, in particular wherein the at least one sensor (11) is fixed or detachably arranged at the covering device (1) or is not part of the covering device (1).

7. The protection arrangement (9) according to claim 5 or **6,** wherein the at least one sensor (11) is arranged at the flexible curtain (5), in particular at the bottom part of the flexible curtain (5), or at the case (3), in particular case top (4), further in particular inside or outside the inner space.

8. The protection arrangement (9) according to any one of claims 5 to 7 further comprising at least one means (12) for defining a path of laser radiation and/or disabling the source of laser radiation (10), in particular the laser, and/or for moving the covering device (1), the means (12) for defining the path and/or for disabling and/or for moving being in particular functionally connected to the at least one sensor (11) and adapted to define the path of laser radiation, in particular the laser, and/or disabling the source of laser radiation (10) and/or for moving the covering device (1) depending on whether the flexible curtain (5) of the covering device (1) abuts the surface arranged below or in the plane of the imaginary bottom (6) of the inner space.

9. The protection arrangement (9) according to claim 8, wherein the at least one means (12) for defining the path of laser radiation, in particular the laser and/or for disabling and/or for moving the covering device (1) is selected from the group consisting of: a motor or a motor setup configured to move the laser radiation and/or the laser, a lever, a steerable motor, a galvano scanner configured to redirect a mirror, a motor or a motor setup configured to position an object in front of the laser.

10. A method (100) for reducing and/or eliminating the amount of laser radiation emitted by a laser weeding device to its environment comprising the following steps, in particular in the given order:
a) providing a laser weeding device comprising a covering device (1) according to any one of claims 1 to **4,** or a protection arrangement (9) according to any one of claims 5 to 9,
b) determining whether the flexible curtain (5) of the covering device (1) abuts a surface arranged below or in the plane of the imaginary bottom (6) of the inner space, the surface arranged below or in the plane of the imaginary bottom (6) of the inner space corresponding to the surface on which the weeding device is positioned, in particular on which plants to be treated are growing,
c) moving the covering device (1) and/or the source of laser radiation (10) to a position in which the flexible curtain (5) of the covering device (1) abuts the surface arranged below or in the plane of the imaginary bottom (6) of the inner space if the curtain (5) was determined to be not abutting, or not moving the covering device (1) and/or the source of laser radiation (10) if the curtain (5) was determined to be abutting, and/or optionally
d) enabling the source of laser radiation (10) to provide laser radiation if the curtain (5) abuts the surface or disabling the source of laser radiation (10) if the curtain (5) does not abut the surface.

11. The method (100) according to claim 10, wherein an additional step b) is performed after step c), in particular wherein determining whether the flexible curtain (5) of the covering device (1) abuts the surface arranged below or in the plane of the imaginary bottom (6) of the inner space in any of steps b) is performed by at least one sensor (11), further in particular by the at least one sensor (11) of the protection arrangement (9).

12. The method (100) according to claim 10 or claim 11, wherein moving the covering device (1) and/or the source of laser radiation (10) in step c) is performed by the at least one means (12) for defining a path of laser radiation, in particular the laser, and/or for moving the covering device, or manually.

13. The method (100) according to any one of claims 10 to 12, wherein the laser weeding device moves in a direction of working during the performance of steps b), c) and/or d), or wherein the device moves only during the performance of steps b) and c), b) and d) or c) and d), or wherein the device moves only during the performance of step b), c), or d), in particular wherein the device moves before step b) and after step d) are performed, or only before step b) and after step d) are performed.

14. A laser weeding device comprising a covering device (1) according to any one of claims 1 to 4, or a protection arrangement (9) according to any one of claims 5 to 9, in particular configured to perform the method (100) according to any one of claims 10 to 13.

15. A use of a covering device (1) according to any one of claims 1 to 4, or a protection arrangement (9) according to any one of claims 5 to 9, or a method (100) according to any one of claims 10 to 13 for reducing or eliminating the amount of laser radiation emitted by a laser weeding device to its environment.
